(19) Europäisches Patentamt
European Patent Office
Office européen des brevets

(11) Numéro de publication: **0 555 269 B1**

# (12) FASCICULE DE BREVET EUROPEEN

(45) Date de publication de fascicule du brevet: **09.08.95**

(51) Int. Cl.$^6$: **B01D 69/10**

(21) Numéro de dépôt: **91918489.5**

(22) Date de dépôt: **21.10.91**

(86) Numéro de dépôt internationale :
**PCT/FR91/00826**

(87) Numéro de publication internationale :
**WO 92/06775 (30.04.92 92/10)**

Le dossier contient des informations techniques présentées postérieurement au dépôt de la demande et ne figurant pas dans le présent fascicule.

## (54) MEMBRANE DE NANOFILTRATION ET SON PROCEDE DE FABRICATION.

(30) Priorité: **22.10.90 FR 9013031**

(43) Date de publication de la demande:
**18.08.93 Bulletin 93/33**

(45) Mention de la délivrance du brevet:
**09.08.95 Bulletin 95/32**

(84) Etats contractants désignés:
**BE DE DK ES FR GB IT NL**

(56) Documents cités:
**EP-A- 0 249 513**
**EP-A- 0 250 327**
**EP-A- 0 288 380**
**WO-A-88/06477**
**US-A- 4 741 744**

(73) Titulaire: **COMMISSARIAT A L'ENERGIE ATOMIQUE**
**31-33, rue de la Fédération**
**F-75015 Paris (FR)**

(72) Inventeur: **BARDOT, Colette**
**88, rue Racine**
**F-69100 Villeurbanne (FR)**
Inventeur: **CARLES, Maurice**
**2, boulevard Laennec**
**F-26700 Pierrelatte (FR)**
Inventeur: **DESPLANTES, René**
**Espeluche**
**F-26780 Malataverne (FR)**
Inventeur: **SCHRIVE, Luc**
**8, allée des Cèdres**
**F-30200 Bagnols-sur-Cèze (FR)**



Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

I.E.C. Product Research and Development, volume 2, no. 3, septembre 1981,American Chemical Society, (Washington, US) H. Murakami et al.:"PBIL tubular reverse osmosis. Application as low-energy concentrators", pages 501-508

(74) Mandataire: **Des Termes, Monique et al**
**Société Brevatome**
**25, rue de Ponthieu**
**F-75008 Paris (FR)**

## Description

La présente invention a pour objet une membrane d'osmose inverse ou de nanofiltration, utilisable notamment dans les industries agroalimentaires et pharmaceutiques.

De façon plus précise, elle concerne des membranes organominérales présentant des perméabilités importantes et une bonne résistance aux pressions élevées et aux traitements chimiques agressifs tels que stérilisation à la vapeur d'eau à 120 °C et lavage par des solutions acides ou basiques.

On rappelle qu'une membrane semiperméable est une membrane comportant une couche active ayant la propriété de permettre la diffusion sélective de certaines espèces de façon à retenir des espèces choisies telles que le chlorure de sodium.

Une membrane de nanofiltration est une membrane qui permet de retenir les substances ayant un poids moléculaire supérieur à un certain seuil situé dans la gamme des poids moléculaires allant de 50 à 1 000.

Les membranes organominérales sont des membranes comportant un support poreux en substance inorganique sur lequel est disposée une couche active en polymère organique.

Des membranes organominérales sont décrites en particulier dans les documents US-A- 4 861 480, EP-A- 0 250 327 ainsi que dans la demande de brevet japonais publiée 59-206008 au nom de TDK Corp.

Dans le document US-A- 4 861 480, ces membranes organominérales sont des membranes semiperméables, constituées par un support poreux en substance inorganique comprenant une couche externe microporeuse ayant une épaisseur de 1 à 2µm, revêtu d'une couche organique dense, semiperméable, à base de polymère ou copolymère de fluorure de vinylidène ayant des groupes fonctionnels donnant à la membrane une perméabilité sélective vis-à-vis de l'eau ou d'autres solvants.

Ces membranes sont utilisables en particulier comme membranes d'osmose inverse pour retenir par exemple le chlorure de sodium.

Le document EP-A- 0 250 327 décrit un élément d'ultrafiltration, d'hyperfiltration ou de déminéralisation comprenant un support poreux en substance inorganique et une membrane microporeuse cloisonnée, asymétrique, en polymère organique, réalisée sur l'une des faces du support poreux et imbriquée dans les pores du support poreux affleurant cette surface sans dépasser celle-ci. Cet élément peut être utilisé pour la déminéralisation de l'eau par effet "Donnan".

Dans cet élément, la couche séparative est imbriquée dans la porosité superficielle d'un support poreux, ce qui permet de traiter des effluents sans préfiltration car la couche séparative étant légèrement en retrait de la surface du support, elle est ainsi insensible aux impacts d'éventuelles particules solides en suspension.

Dans ce document, l'épaisseur de la couche séparative est de 25 à 200µm, ce qui conduit à des perméabilités à l'eau de 0,05 à $2,5.10^{-5} m.d^{-1}.Pa^{-1}$.

Bien que les membranes décrites dans ces deux documents présentent des propriétés satisfaisantes, il serait intéressant de pouvoir encore améliorer leur perméabilité aux solutions traitées.

La demande de brevet japonais 59/206008 décrit un filtre comprenant un support poreux céramique sur lequel est disposée une membrane organique mince semi-perméable, utilisable pour l'osmose inverse.

Dans ce cas, l'épaisseur est d'au soins 1µm. Ainsi, on peut obtenir de bonnes perméabilités, mais les matériaux organiques utilisés ne sont pas adaptés à la séparation des solutés dans la gamme de poids moléculaires allant de 50 à 1 000.

La présente invention a précisément pour objet une membrane organominérale de nanofiltration qui présente des propriétés améliorées par rapport aux membranes décrites dans ces documents.

Selon l'invention, la membrane de nanofiltration comprend un support poreux en substance inorganique revêtu sur une face

- d'une première couche mésoporeuse en matériau inorganique ayant un rayon moyen de pore inférieur à 10nm, et
- d'une seconde couche active disposée sur la première couche mésoporeuse, ayant une épaisseur de 0,1 à 1µm, réalisée en polymère organique choisi dans le groupe comprenant les polysulfones sulfonées, les polyfluorures de vinylidène greffés par du méthacrylate de diaminoéthyle et les ionomères perfluorés.

Dans cette membrane, le choix des polymères constituant la seconde couche active permet en particulier d'obtenir des couches actives encore plus minces que dans le cas du document US-A- 4 861 480 et d'améliorer fortement la perméabilité de la membrane aux solutions traitées. De plus, les polymères utilisés permettent aussi d'accroître l'affinité de la membrane pour le solvant des solutions traitées, ce qui améliore également la perméabilité.

Ainsi, lorsque les solutions traitées sont des solutions aqueuses ou polaires, la couche active est réalisée en polymère hydrophile, par exemple en polybenzimidazolone, en polyfluorure de vinylidène greffé par du méthacrylate de diaminoéthyle, en polysulfone sulfonée ou en ionomère perfluoré comportant des groupements échangeurs de cations répondant par exemple aux formules $-SO_3M$ ou -COOM avec M représentant un proton, un cation métallique ou une entité cationique plus complexe.

A titre d'exemple de tels ionomères, on peut citer le polymère perfluoré sulfonique répondant à la formule :

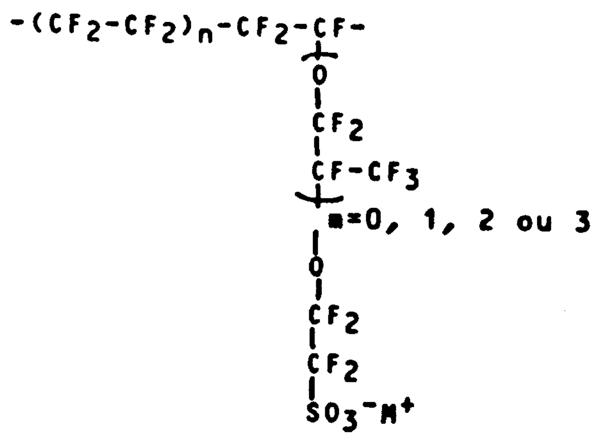

dans laquelle M représente un proton, un cation métallique ou un cation complexe, m est un nombre entier allant de 0 à 3 et n est un nombre entier allant de 0 à 16. Cet ionomère est commercialisé sous la marque Nafion®.

L'emploi d'ionomères perfluorés de ce type dans des membranes composites organiques pour la séparation de gaz est décrit dans US-A- 4 741 744.

Dans ce cas, on peut aussi utiliser des polymères organominéraux tels que les polyphosphazènes et les polymères contenant du silicium.

Dans la membrane de l'invention, les bonnes propriétés mécaniques ainsi que la bonne résistance à la pression sont dues en particulier à la présence du support en substance inorganique.

Les substances inorganiques susceptibles d'être utilisées pour réaliser ce support peuvent être des métaux ou des alliages métalliques, par exemple le nickel et les alliages de nickel, l'acier inoxydable ou tout alliage insensible à la corrosion dans le milieu utilisé. On peut aussi utiliser du carbone poreux, ou encore un matériau céramique tel qu'un oxyde, un carbure, un nitrure ou un siliciure, par exemple l'alumine ou le carbure de silicium.

Selon l'invention, la première couche mésoporeuse disposée sur le support, qui présente un rayon moyen de pore inférieur à 10nm, peut être réalisée en oxyde ou hydroxyde métallique simple ou mixte, par exemple en alumine, en oxyde de zirconium ou en oxyde de titane.

Des membranes de filtration comportant un support poreux inorganique revêtu d'une couche microporeuse en oxyde métallique tel que la zircone, ont été décrites dans WO 88/06477.

L'invention a également pour objet un procédé de fabrication de la membrane de nanofiltration décrite ci-dessus.

Ce procédé comprend les étapes successives suivantes :

a) application sur une face d'un support poreux en substance inorganique d'une solution colloïdale du matériau inorganique destiné à former la première couche mésoporeuse,

b) séchage de la solution colloïdale ainsi appliquée,

c) traitement thermique de la couche séchée,

d) introduction dans les pores de la couche ainsi séchée d'un composé capable de boucher les pores,

e) mise en contact du support revêtu de la première couche mésoporeuse contenant ledit composé avec une solution du polymère organominéral ou du polymère organique destiné à former la seconde couche dans un solvant ne dissolvant pas le composé utilisé dans l'étape d),

f) séchage de la solution pour évaporer le solvant, et

g) immersion du support ainsi traité dans un liquide capable de dissoudre le composé utilisé dans l'étape d) sans dissoudre la première couche mésoporeuse et la seconde couche active.

L'utilisation, selon le procédé de l'invention, d'un composé obturant les pores de la première couche mésoporeuse, permet de déposer ensuite sur cette première couche une seconde couche active extrêmement fine, ce qui, combiné avec le choix d'un polymère approprié, permet d'obtenir une perméabilité de la membrane aux solutions traitées 10 à 20 fois plus élevée que celle que l'on obtient notamment avec le document US-A- 4 861 480.

Les étapes a) à c) du procédé de l'invention, qui concernent le dépôt de la première couche mésoporeuse, peuvent être réalisées en utilisant les techniques sol-gel décrites, par exemple pour $Al_2O_3$, dans le document FR-A- 2 550 953.

Après réalisation de la première couche mésoporeuse sur la surface du support poreux, on introduit dans les pores de cette couche un composé capable de boucher les pores. Ce composé est choisi en particulier en fonction du solvant qui sera utilisé dans l'étape suivante de réalisation de la seconde couche active organique.

En effet, le composé ne doit pas être dissous par ce solvant afin de permettre la réalisation d'une couche active uniquement sur la surface du support poreux. Dans le cas où l'on utilise le diméthylformamide comme solvant, le composé peut être du chlorure de sodium.

L'introduction du composé dans les pores peut être effectuée par imprégnation de la couche mésoporeuse au moyen d'une solution aqueuse de ce composé suivie d'un séchage et d'un lavage contrôlé pour éliminer l'excès superficiel de composé. Lorsqu'il s'agit de NaCl, le lavage peut être effectué avec du méthanol.

Lorsque le solvant utilisé dans l'étape e) est du diméthylformamide, le composé capable de boucher les pores peut être aussi de la gélatine, qui peut être introduite dans les pores à partir d'une solution aqueuse de gélatine que l'on laisse solidifier puis sécher à la température ambiante.

Après bouchage des pores de la première couche mésoporeuse, on peut déposer la deuxième couche active organique sur le support par mise en contact de celui-ci avec une solution appropriée du polymère organique ou organominéral. Les solvants utilisés dépendent en particulier de la nature du polymère à déposer.

Dans le cas des polysulfones, des polybenzimidazolones et des polyfluorures de vinylidène, le solvant utilisé peut être le diméthylformamide, le dimèthylsulfoxyde (DMSO), la N-mèthyl-2-pyrrolidone, le diméthylacétamide, etc.

Pour ce dépôt, l'épaisseur de la seconde couche active peut être réglée en particulier en choisissant la concentration en polymère de la solution. En effet, l'épaisseur de la couche active déposée augmente avec la concentration en polymère de la solution utilisée.

Généralement, les concentrations en polymère sont faibles et peuvent aller par exemple de 0,2 à 2%.

Lorsque le polymère utilisé est un ionomère perfluoré tel que le Nafion®, on peut utiliser des solutions de l'ionomère dans des mélanges eau/alcool , par exemple un mélange eau/éthanol, comme il est décrit dans FR-A- 2597491.

L'emploi d'une solution eau/éthanol permet d'obtenir en particulier des membranes très minces présentant des perméabilités à l'eau encore plus élevées.

Après application de la solution de polymère, on effectue un séchage pour évaporer le solvant et former la couche active. Les propriétés séparatives de cette couche active dépendent en particulier du taux d'évaporation du solvant, qui est généralement de 95 à 100%. On immerge ensuite l'ensemble dans un liquide approprié pour éliminer le composé obturant les pores et conditionner la membrane en vue de ses utilisations.

Le liquide utilisé est généralement de l'eau.

D'autres caractéristiques et avantages de l'invention apparaîtront mieux à la lecture des exemples suivants donnés bien entendu à titre illustratif et non limitatif.

Dans les exemples 1 à 6 qui suivent, on utilise le même support poreux en alumine revêtu d'une couche mésoporeuse en oxyde de titane, mais des couches actives différentes.

**Exemple 1** : Membrane comportant une couche active en polybenzimidazolone.

On part d'un support en alumine tubulaire d'un diamètre interne de 7mm ayant un diamètre de pore sur sa face interne de 0,2µm, et on dépose sur la surface interne de ce support tubulaire une couche d'apprêt mésoporeuse en oxyde de titane.

Pour effectuer ce dépôt, on met en contact la face interne du support poreux tubulaire avec une solution colloïdale d'hydroxyde de titane, puis on sèche et on soumet l'ensemble à un traitement thermique à 450°C pendant 2h.

On obtient ainsi une membrane minérale comportant une couche mésoporeuse ayant un rayon moyen de pore de 8,7nm.

On imprègne alors la couche mésoporeuse de $TiO_2$ avec une solution aqueuse à 25% en poids de NaCl. On sèche l'ensemble pour éliminer l'eau, puis on effectue un lavage contrôlé avec du méthanol pour enlever l'excès superficiel de NaCl.

On met ensuite en contact le support ainsi traité, revêtu de la couche mésoporeuse dont les pores ont été bouchés par du NaCl, avec une solution à 0,2% (P/P) de polybenzimidazolone dans du diméthylformamide (DMF). On sèche ensuite pour évaporer 99% du solvant, puis on plonge la membrane dans l'eau à la température ambiante pour éliminer le chlorure de sodium et la conditionner. La couche active en polybenzimidazolone (PBIL) a une épaisseur de 0,25μm avant immersion de la membrane dans l'eau.

On détermine alors les caractéristiques de perméabilité et de rétention de la membrane ainsi obtenue en faisant circuler à l'intérieur de celle-ci une solution appropriée (solution de polyéthylène glycol, eau, ou solution de NaCl) sous une pression de 6MPa, à une température de 40°C, avec une vitesse tangentielle de 1m/s et on détermine le débit du perméat et sa concentration en soluté (polyéthylène glycol 1000, polyéthylène glycol 200 ou NaCl). Les résultats sont donnés dans le tableau joint.

Ainsi, lorsque le soluté est du polyéthylène glycol ayant un poids moléculaire de 1 000 et que la solution traitée est une solution aqueuse à 50g/l de polyéthylène glycol, le taux de rétention du polyéthylène glycol 1000 est de 98%. Le flux de perméat dans le cas d'eau pure est de 600l/d.$m^2$.

**Exemple 2** : Membrane comportant une couche active en polyfluorure de vinylidène greffé par du méthacrylate de diaminoéthyle.

Dans cet exemple, on suit le même mode opératoire que dans l'exemple 1 pour préparer un support en alumine muni d'une couche mésoporeuse de $TiO_2$ dont les pores ont été bouchés par du NaCl.

On dépose ensuite sur ce support une couche active de polyfluorure de vinylidène greffé par du méthacrylate de diaminoéthyle (PVDF-MAD) en mettant en contact ce support avec une solution à 1% (P/P) de PVDF-MAD dans du diméthylformamide (DMF).

On évapore ensuite 99% du solvant, puis on immerge la membrane dans de l'eau pure pour éliminer le chlorure de sodium et la conditionner. On obtient ainsi une membrane ayant une couche active en PVDF-MAD d'une épaisseur de 0,3μm avant immersion dans l'eau.

On détermine comme dans l'exemple 1 les taux de rétention et les flux de perméat de la membrane ainsi obtenue dans le cas d'eau pure et d'une solution de polyéthylène glycol contenant 25g/l de PEG 1000 et 25g/l de PEG 200.

Les résultats sont donnés dans le tableau joint.

**Exemple 3** : Membrane organominérale comprenant une couche active en polysulfone sulfonée.

On suit le même mode opératoire que dans l'exemple 1 pour préparer un support en alumine revêtu d'une couche mésoporeuse de $TiO_2$, puis on bouche les pores de cette couche avec de la gélatine en l'imprégnant d'une solution aqueuse de gélatine à 2 ou 3 % que l'on laisse solidifier, et sécher à la température ambiante.

On dépose ensuite sur la couche mésoporeuse ainsi traitée, la couche active de polysulfone sulfonée (PSS) en mettant en contact la couche mésoporeuse traitée avec une solution à 1% de PSS dans du DMF. Après évaporation contrôlée du solvant à un taux de 99%, on immerge le support ainsi traité dans une solution aqueuse à 125g/l de $NaNO_3$ pour éliminer la gélatine et conditionner la membrane.

On obtient ainsi une membrane de nanofiltration dont la couche active organique a une épaisseur d'environ 0,4μm avant immersion dans la solution aqueuse.

On détermine comme dans l'exemple 2 les taux de rétention et les débits de perméat de la membrane. Les résultats obtenus sont donnés dans le tableau joint.

**Exemple 4** : Membrane organominérale comportant une couche active en Nafion®.

Dans cet exemple, on suit le même mode opératoire que dans l'exemple 3 pour préparer un support poreux en alumine revêtu d'une couche mésoporeuse de $TiO_2$ dont les pores ont été bouchés par de la gélatine.

On dépose ensuite sur ce support une couche active de Nafion® en mettant en contact la couche mésoporeuse avec une solution hydroalcoolique à 1,25% de Nafion 117® sous forme $H^+$.

Après évaporation complète du solvant, on procède à l'hydratation de la membrane par percolation d'eau sous pression et température croissantes.

On obtient ainsi une membrane dont la couche active a une épaisseur de 0,5µm avant le traitement d'hydratation.

On détermine comme dans les exemples précédents les taux de rétention et les perméabilités de la membrane obtenue. Les résultats sont donnés dans le tableau joint.

**Exemple 5** : Membrane organominérale comportant une couche active en Nafion®.

On suit le même mode opératoire que dans l'exemple 4 pour préparer un support en alumine revêtu d'une couche mésoporeuse en $TiO_2$ dont les pores ont été bouchés par de la gélatine, puis on dépose sur la couche mésoporeuse ainsi traitée une couche active de Nafion par mise en contact de cette couche avec une solution hydroalcoolique comprenant 0,6% de Nafion 117®. Après évaporation complète du solvant, on procède à l'hydratation de la membrane par percolation d'eau comme dans l'exemple 4.

L'épaisseur de la couche active de la membrane ainsi obtenue est d'environ 0,1µm avant le traitement d'hydratation.

On détermine comme dans les exemples précédents les flux de perméat et les taux de rétention de la membrane ainsi obtenue. Les résultats sont donnés dans le tableau annexé.

**Exemple 6** : Membrane organominérale comportant une couche active en Nafion 117® sous forme $Li^{+}$.

On suit le même mode opératoire que dans l'exemple 3 pour préparer un support poreux en alumine revêtu d'un couche mésoporeuse en $TiO_2$ dont les pores ont été bouchés par de la gélatine, puis on met en contact la couche mésoporeuse avec une solution de Nafion 117® sous forme $Li^+$ dans un mélange d'éthanol et d'eau (50/50 en volume) ayant une concentration en Nafion ® de 1,25 %.

Après évaporation complète des solvants, on procède à l'hydratation de la membrane par percolation d'eau sous pression et température croissantes comme dans l'exemple 4. L'épaisseur de la couche active, calculée pour le polymére non gonflé d'eau, est inférieure à 0,2µm.

On détermine alors les taux de rétention et les flux de perméat de la membrane ainsi obtenue en opérant dans les mêmes conditions que dans les exemples précédents. Les résultats obtenus sont donnés dans le tableau annexé.

Dans le tableau annexé on a également donné à titre comparatif les taux de rétention et les flux de perméat obtenus avec la membrane organominérale de l'exemple 2 du document US-A- 4 861 480.

Au vu des résultats de ce tableau, on constate que les débits de perméat sont nettement plus élevés avec les membranes de l'invention qu'avec la membrane du document US-A- 4 861 480.

De même, on remarque que la membrane du document US-A- 4 861 480 a un taux de rétention de 90% pour le chlorure de sodium, alors que la membrane de l'exemple 3 a un taux de rétention pour le chlorure de sodium qui est seulement de 5%.

Les taux de rétention des membranes de l'invention vis-à-vis du polyéthylène glycol 1000 sont très élevés puisqu'ils vont de 98 à plus de 99,5%. Dans le cas du polyéthylène-glycol 200, on obtient aussi des taux de rétention élevés.

Ainsi, grâce au procédé de l'invention et au choix des couches actives utilisées, on peut obtenir des membranes organominérales ayant des performances supérieures à celles que l'on obtenait auparavant.

TABLEAU

| | USA 4861480 | Ex.1 | Ex.2 | Ex.3 | Ex.4 | Ex.5 | Ex.6 |
|---|---|---|---|---|---|---|---|
| Polymère de la seconde couche | PVDF-SCS [1] | PBIL [2] | PVDF MAD [3] | PSS [4] | Naflon 117 | Naflon 117 | Naflon 117 |
| Couche mésoporeuse | $Al_2O_3$ | $TiO_2$ | $TiO_2$ | $TiO_2$ | $TiO_2$ | $TiO_2$ | $TiO_2$ |
| Epaisseur de la seconde couche (µm) | 1 | 0,25 | 0,3 | 0,4 | 0,5 | 0,1 | <0,2 |
| Débit de perméat : $H_2O$ ($l.d^{-1}.m^{-2}$) 6MPa 40°C | 95 | 600 | 2500 | 2100 | 1131 | 2340 | 3440 |
| Débit de perméat : solution aqueuse à $25g.l^{-1}$ de PEG 1000[5] et $25g.l^{-1}$ de PEG 200[6] ($l.d^{-1}.m^{-2}$) 6 MPa 40°C U = $1mS^{-1}$ | | | | | | | |
| Retention PEG 1000[5] (%) | | solution aq. à $50g.l^{-1}$ de PEG 1000[5] 98 | 98,6 | 98,9 | >99,5 | 99,3 | 98,8 |
| Retention PEG 200[6] (%) | | | 65,2 | 56 | 66,5 | 56 | 69,6 |
| Solution de NaCl - concentration en NaCl ($g.l^{-1}$) | 3 | | | 5 | | | |
| Rétention NaCl (%) | 91 | | | 10 | | | |

1) PVDF-SCS = polyfluorure de vinylidène greffé par du styrène chlorosulfoné
2) PBIL = polybenzimidazolone
3) PVDF-MAD = polyfluorure de vinylidène greffé par le méthacrylate de diamino éthyle.
4) PSS = polysulfone sulfonée
5) PEG 1000 = polyéthylène glycol ayant un poids moléculaire de 1000
6) PEG 200 = polyéthylène glycol ayant un poids moléculaire de 200.

## Revendications

1. Membrane nanofiltration, caractérisée en ce qu'elle comprend un support poreux en substance inorganique revêtu sur une face

- d'une première couche mésoporeuse en matériau inorganique ayant un rayon moyen de pore inférieur à 10nm, et
- d'une seconde couche active disposée sur la première couche mésoporeuse, ayant une épaisseur de 0,1 à 1µm, réalisée en polymère organique choisi dans le groupe comprenant les polysulfones sulfonées, les polyfluorures de vinylidène greffés par du méthacrylate de diaminoéthyle et les ionomères perfluorés.

**2.** Membrane selon la revendication 1, caractérisée en ce que la substance inorganique du support poreux est choisie parmi l'alumine, le nickel, les alliages de nickel, l'acier inoxydable, le carbure de silicium et le carbone.

**3.** Membrane selon l'une quelconque des revendications 1 et 2, caractérisée en ce que le matériau inorganique de la première couche mésoporeuse est de l'oxyde de titane, de l'oxyde de zirconium ou de l'alumine.

**4.** Membrane selon l'une quelconque des revendications 1 à 3, caractérisée en ce que l'ionomère perfluoré répond à la formule :

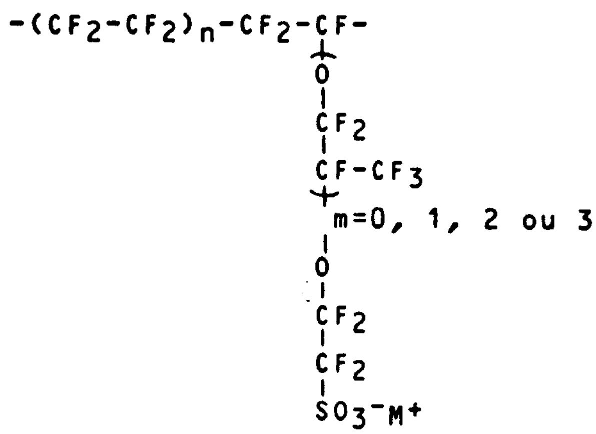

dans laquelle M représente un proton, un cation métallique ou un cation complexe, m est un nombre entier allant de 0 à 3 et n est un nombre entier allant de 0 à 16.

**5.** Membrane selon l'une quelconque des revendications 1 et 4, caractérisée en ce que le support poreux est en alumine et en ce que la première couche mésoporeuse est en oxyde de titane.

**6.** Membrane selon l'une quelconque des revendications 1 à 5, caractérisée en ce qu'elle permet de retenir les solutés ayant des poids moléculaires allant de 50 à 1 000.

**7.** Procédé de préparation d'une membrane de nanofiltration selon l'une quelconque des revendications 1 à 6, caractérisé en ce qu'il comprend les étapes successives suivantes :

a) application sur une face d'un support poreux en substance inorganique d'une solution colloïdale du matériau inorganique destiné à former la première couche mésoporeuse,
b) séchage de la solution colloïdale ainsi appliquée,
c) traitement thermique de la couche séchée,
d) introduction dans les pores de la couche ainsi séchée d'un composé capable de boucher les pores,
e) mise en contact du support revêtu de la première couche mésoporeuse contenant ledit composé avec une solution du polymère organique destiné à former la seconde couche dans un solvant ne dissolvant pas le composé utilisé dans l'étape d),
f) séchage de la solution pour évaporer le solvant, et
g) immersion du support ainsi traité dans un liquide capable de dissoudre le composé utilisé dans l'étape d) sans dissoudre la première couche mésoporeuse et la seconde couche active.

## Claims

1. Nanofiltration membrane, characterized in that it comprises a porous inorganic material support coated on one face with a first mesoporous, inorganic material layer having a mean pore radius below 10 nm and a second active layer located on the first mesoporous layer and having a thickness of 0.1 to 1 μm, made from organic polymer chosen from within the group including sulphonated polysulphones, polyvinylidine fluorides grafted by diaminoethyl methacrylate and perfluorine ionomers.

2. Membrane according to claim 1, characterized in that the inorganic material of the porous support is chosen from among alumina, nickel, nickel alloys, stainless steel, silicon carbide and carbon.

3. Membrane according to either of the claims 1 and 2, characterized in that the inorganic material of the first mesoporous layer is titanium dioxide, zirconium dioxide or alumina.

4. Membrane according to any one of the claims 1 to 3, characterized in that the perfluorine ionomer complies with the formula:

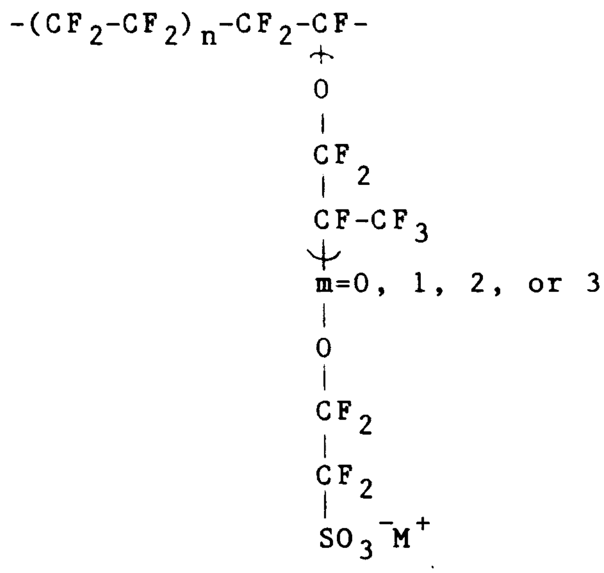

in which M represents a proton, a metal cation or a complex cation, m is an integer from 0 to 3 and n is an integer from 0 to 16.

5. Membrane according to either of the claims 1 and 4, characterized in that the porous support is of alumina and that the first mesoporous layer is of titanium dioxide.

6. Membrane according to any one of the claims 1 to 5, characterized in that it makes it possible to retain solutes having molecular weights from 50 to 1000.

7. Process for the preparation of a nanofiltration membrane according to any one of the claims 1 to 6, characterized in that it comprises the following successive stages:
   a) application to one face of an inorganic material porous support of a colloidal solution of the inorganic material for forming the first mesoporous layer,
   b) drying the thus applied colloidal solution,
   c) heat treatment to the dried layer,
   d) introduction into the pores of the thus dried layer of a compound able to block the pores,
   e) contacting the support coated with the first mesoporous layer containing said compound with a solution of an organic polymer for forming the second layer in a solvent not dissolving the compound used in stage d),
   f) drying the solution in order to evaporate the solvent and

g) immersion of the thus treated support in a liquid able to dissolve the compound used in stage d) without dissolving the first mesoporous layer and the second active layer.

## Patentansprüche

1. Nanofiltrationsmembran,
**dadurch gekennzeichnet**,
daß sie einen porösen Träger aus einer anorganischen Substanz umfaßt, der auf einer Fläche beschichtet ist mit
    - einer ersten mesoporösen Schicht aus anorganischem Material, die einen mittleren Porenradius kleiner 10 nm hat, und
    - einer zweiten aktiven Schicht, die auf der ersten mesoporösen Schicht abgelagert ist, die eine Dicke von 0,1 bis 1 µm hat, hergestellt aus einem organischen Polymer, das in der Gruppe ausgewählt wird, welche die sulfonierten Polysulfone, die mit Diaminoethyl-Methacrylat imolantierten Vinyliden-Polyfluoride und die perfluoridierten Ionomere umfaßt.

2. Membran gemäß Anspruch 1, dadurch gekennzeichnet, daß die anorganische Substanz des porösen Trägers ausgewählt wird unter Aluminium, Nickel, den Nickellegierungen, inoxidierbarem Stahl, Siliziumcarbid und Kohlenstoff.

3. Membran gemäß einem der Ansprüche 1 und 2, dadurch gekennzeichnet, daß das anorganische Material der ersten mesoporösen Schicht Titanoxid, Zirkoniumoxid oder Aluminium ist.

4. Membran gemäß einem der Ansprüche 1 bis 3, dadurch gekennzeichnet, daß das perfluoridierte Ionomer der Formel:

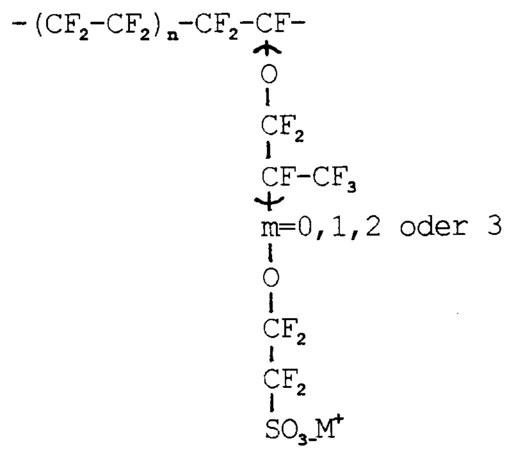

entspricht, in welcher M ein Proton, Metall-Kation oder ein Komplex-Kation darstellt, m ein ganze Zahl zwischen 0 und 3 ist und n ein ganze Zahl zwischen 0 und 16 ist.

5. Membran gemäß einem der Ansprüche 1 und 4, dadurch gekennzeichnet, daß der poröse Träger aus Aluminium ist und daß die erste mesoporöse Schicht aus Titanoxid ist.

6. Membran gemäß einem der Ansprüche 1 bis 5, dadurch gekennzeichnet, daß sie es ermöglicht, die gelösten Stoffe zurückzuhalten, welche Molekulargewichte zwischen 50 und 1000 haben.

7. Verfahren zur Herstellung einer Nanofiltrationsmembran gemäß einem der Ansprüche 1 bis 6, dadurch gekennzeichnet, daß es die folgenden aufeinanderfolgenden Anschnitte umfäßt:
    a) Anwendung einer Kolloidlösung des anorganischen Materials auf einer Fläche eines porösen Trägers aus anorganischer Substanz, die dazu dient, die erste mesoporöse Schicht zu bilden,
    b) Trocknen der somit angewendeten Kolloidlösung,
    c) thermische Bearbeitung der getrockneten Schicht,

d) Einführung einer Verbindung in den Poren der somit getrockneten Schicht, die fähig ist, die Poren zu versperren,
e) in Kontakt bringen des Trägers, der mit der ersten mesoporösen Schicht bedeckt ist, welche die besagte Verbindung enthält, mit einer Lösung des organischen Polymers, das dazu dient, die zweite Schicht in einem Lösungsmittel zu bilden, das nicht die in Anschnitt d) verwendete Verbindung auflöst,
f) Trocknen der Lösung, um das Lösungsmittel zu verdampfen, und
g) Eintauchen des somit behandelten Trägers in eine Flüssigkeit, die fähig ist, die in Anschnitt d) verwendete Verbindung aufzulösen, ohne die erste mesoporöse Schicht und die zweite aktive Schicht aufzulösen.